# EUROPÄISCHE PATENTANMELDUNG

(11) **EP 0 911 201 A2**
(43) Veröffentlichungstag der Anmeldung: **28.04.1999**
(21) Anmeldenummer: 98119366.7
(22) Anmeldetag: 14.10.1998
(51) Int. Cl.: B60J 11/00

(54) **Vorrichtung zum Überdachen von Behältnissen**

(30) Priorität: 21.10.1997 DE 29718620 U
(71) Anmelder: Oerlikon Contraves Gesellschaft mit beschränkter Haftung, 78333 Stockach (DE)
(72) Erfinder: Hunn, Erwin, 78333 Stockach (DE)
(74) Vertreter: Weiss, Peter, Dr. rer. nat.

(57) **Zusammenfassung**

Die Erfindung betrifft eine Vorrichtung zum Überdachen von Behältnissen, insbesondere von Containern, Kabinen, Paletten od.dgl., sowie von Flächen zwischen bzw. neben diesen Behältnissen, wobei über das Behältnis (1) bzw. Fläche ein Membrandach (3) aus flexiblem Werkstoff gespannt ist, dessen Seitenkanten (14) tailliert, d.h., bogenförmig nach innen gewölbt sind.

## Beschreibung

Die Erfindung betrifft eine Vorrichtung zum Überdachen von Behältnissen, insbesondere Containern, Kabinen, Paletten od.dgl., sowie von Flächen zwischen bzw. neben diesen Behältnissen.

Behältnisse, wie Container, Kabinen, Paletten od.dgl. Aufnahmeräume oder Tragelemente finden in vielen Fällen des täglichen Lebens Anwendung. Stehen sie im Freien, sind sie dem Wetter ungeschützt ausgesetzt. Vor allem, wenn sie der Sonne ausgesetzt sind, können im Innern des Aufnahmeräume Temperaturen auftreten, die sowohl für das Lagergut als auch beispielsweise für sich in dem Container aufhaltende Menschen unangenehm sind. Deswegen werden derartige Behältnisse oder Tragelemente heute in vielen Fällen klimatisiert, was allerdings teuer ist.

Sonnenabstrahlende Beschichtungen derartiger Behälter sind zwar möglich, können aber eine unangenehme Erwärmung nicht ausreichend verhindern.

Bisher verwendete Überdachungen bergen die Gefahr in sich, dass zwischen dem Dach des Behältnisses und der Überdachung ein Wärmestau entsteht. Zudem halten derartige Überdachungen nur eine geringe Windgeschwindigkeit aus und können deshalb bei fahrbaren, wie auch dem Sturm ausgesetzten Behältnissen nicht Anwendung finden.

Der vorliegenden Erfindung liegt die Aufgabe zugrunde, eine Vorrichtung der oben genannten Art zu schaffen, welche einfach zu montieren ist, hohe Windgeschwindigkeiten aushält und einen Hitzestau zwischen Bedachung und Behältnis verhindert.

Zur Lösung dieser Aufgabe führt, dass über das Behältnis bzw. Fläche ein Membrandach aus flexiblem Werkstoff gespannt ist, dessen Seitenkanten tailliert, d.h., bogenförmig nach innen gewölbt sind.

Ein derartiges Membrandach hat den Vorteil, dass es so über das Behältnis gespannt werden kann, dass sich zwischen dem Membrandach und dem Dach des Behältnisses kein Hitzestau bildet. Bevorzugt geschieht dies so, dass das Membrandach in Gebrauchslage eine antiklastische Form einnimmt. Die antiklastische Form bedeutet, dass die in einem Viereck vorhandenen Diagonale gegenläufig zueinander gekrümmt sind. D.h., die eine Diagonale bildet ein Tal und die andere Diagonale einen Berg aus. Berg und Tal treffen sich im Schnittpunkt der Diagonalen. Diese antiklastische Form bewirkt, dass sich die Überdachung zu zwei Seiten hin öffnet, so dass Wärme zu diesen beiden Seiten ungehindert abfliessen kann. Ferner können auch Regen oder Schnee seitlich besser abfliessen. Zu diesem Zweck ist das Membrandach auch zur Überdachung von Flächen neben oder zwischen Behältnissen geeignet.

Ferner ist die Luftzirkulation unter dieser antiklastischen Überdachung wesentlich verbessert. Letzteres bedeutet wiederum, dass die Überdachung kaum ein Hindernis für zirkulierende Luft darstellt, so dass eine derartige Überdachung Windgeschwindigkeiten bis 130 km pro Stunde aushält. Damit kann eine derartige erfindungsgemässe Überdachung auch einen fahrbaren Container oder ein fahrbares Behältnis überspannen.

Es wird somit nicht nur die direkte Sonneneinstrahlung auf das Behältnis verhindert, sondern auch eine sich ausbildende Wärme sofort abgeführt. Dies ist ein erheblicher Vorteil der vorliegenden Erfindung.

Für das Aufspannen des Membrandachs auf dem Dach des Behältnisses sind Auslegearme vorgesehen. Dabei finden bevorzugt vier Auslegearme Verwendung, wobei je zwei sich gegenüberliegende Auslegearme fest und zwei weitere sich diagonal gegenüberliegende Auslegearme gelenkig mit dem Dach des Behältnisses verbunden sind. Hierdurch wird zum einen die Befestigung des Membrandachs wesentlich erleichtert, zum anderen wird auch die Halterung des Membrandachs in Gebrauchslage verbessert. Bevorzugt ragen die zwei feststehenden Auslegearme schräg nach unten, während die zwei gelenkig verbundenen Auslegearme schräg nach oben ausgerichtet sind. Hierdurch ergibt sich die oben erwähnte antiklastische Form des Membrandachs.

Das Spannen des Membrandachs geschieht bevorzugt über zwei Spanngurte, welche an den freien Enden der gelenkig verbundenen Auslegearme angreifen. Durch Spannen dieser Spanngurte kann dem Membrandach die gewünschte Form gegeben werden. Damit die feststehenden Auslegearme nicht übermässigen Zugkräften ausgesetzt sind, können auch diese über Gurte mit beispielsweise der Bodenfläche des Behältnisses selbst verbunden sein.

Um dem Membrandach ferner die gewünschte Form geben zu können, müssen alle vier Seitenkanten zwischen den einzelnen Eckpunkten bogenförmig nach innen gewölbt ausgebildet sein. Hierdurch wird vermieden, dass Teile bei der antiklastischen Form nicht gespannt sind.

Ein derartiges Membrandach zusammen mit den Auslegearmen ist in wenigen Minuten auf einem Behältnis montiert. Ferner können auch Kabinen ohne weiteres nachgerüstet werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht einer erfindungsgemässen Vorrichtung zum Überdachen eines Behälters;
Figur 2 eine perspektivische Ansicht eines Teils des Behälters gemäss Figur 1 vor dem Aufspannen eines erfindungsgemässen Membrandachs.

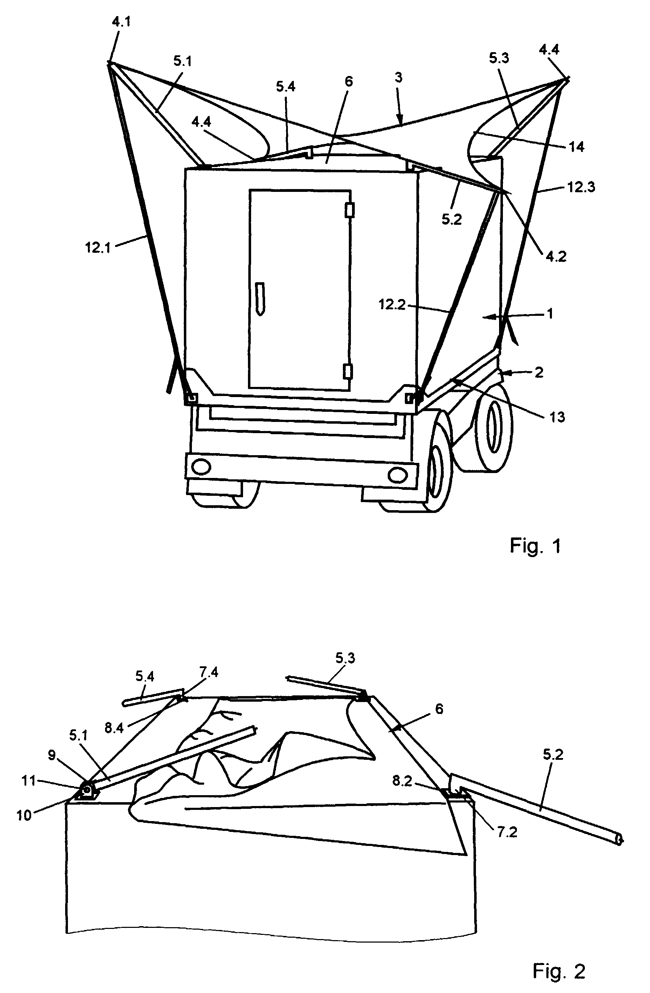

In Figur 1 ist ein Behältnis 1 erkennbar, das auf der Ladefläche eines Anhängers 2 aufsitzt. Über das Behältnis 1 ist ein Membrandach 3 gespannt, welches an vier Eckpunkten 4.1 bis 4.4 mit Auslegearmen 5.1 bis 5.4 verbunden ist. Zwei der Auslegearme 5.2 und 5.4, die sich diagonal gegenüberliegen, sind fest auf einem Dach 6 des Behältnisses 1 befestigt. Hierzu ist der entsprechende Auslegearm 5.2 bzw. 5.4 über ein Winkelstück 7.2 bzw. 7.4 auf eine Montageplatte 8.2 bzw. 8.4 aufgesetzt, die wiederum durch entsprechende, nicht näher gezeigte Befestigungselemente auf dem Dach 6 des Behältnisses 1 festgelegt ist. Insbesondere in Figur 2 ist erkennbar, dass die Auslegearme 5.2 und 5.4 schräg geneigt nach unten verlaufen.

Die beiden anderen Auslegearme 5. 1 und 5.3 sind dagegen gelenkig mit dem Dach 6 verbunden. Hierzu greift eine dem Auslegearm 5.1 bzw. 5.3 angeformte Zunge 9 zwischen zwei Gabellaschen 10 und ist mit diesen über einen Gelenkbolzen 11 verbunden. Auf diese Weise kann die Zunge 9 zwischen den beiden Gabellaschen 10 drehen, so dass der Auslegearm 5.1 bzw. 5.3 nach aussen geschwenkt werden kann.

Die freien Enden der Auslegearme 5.1 bis 5.4 sind über Gurte 12.1 bis 12.4 jeweils mit einer Bodenfläche 13 bzw. ISO-Ecken oder dem Behältnis 2 verbunden. Dabei sind insbesondere die Gurte 12.1 und 12.3, welche die freien Enden der bewegbaren Auslegearme 5.1 und 5.3 mit der Bodenfläche 13, den ISO-Ecken oder dem Behältnis verbinden, als Spanngurte ausgebildet.

Die Funktionsweise der vorliegenden Erfindung ist folgende:

Auf dem Dach eines Behältnisses 1 werden die Auslegearme 5.1 bis 5.4 bzw. deren entsprechende Montageplatten festgelegt. Dabei liegen sich die feststehenden 5.2 und 5.4 bzw. beweglichen Auslegearme 5.1 und 5.3 diagonal gegenüber.

Nunmehr werden die zwei sich gegenüberliegenden Ecken 3 an den beiden freien Enden der feststehenden Auslegearme 5.2 und 5.4 eingehängt. Hierzu weisen diese Enden entsprechende Schlitze, Haken od.dgl. auf. Die Auslegerarme werden sodann mit den Spanngurten 12.2 und 12.4 stabilisiert.

Danach werden die sich ebenfalls gegenüberliegenden Ecken des Membrandachs mit den bewegbaren Auslegearmen 5.1 und 5.3 verbunden und diese nach aussen geklappt. Deren freien Enden sind nicht nur mit den Ecken des Membrandachs gekoppelt, sondern über die oben erwähnten Spanngurte 12.1 und 12.3 auch mit der Bodenfläche 13 oder dem Behältnis verbunden. Beim Spannen dieser Spanngurte 12.1 und 12.3 ergibt sich eine antiklastische Form des Membrandachs, wobei zwischen den freien Enden der bewegbaren Auslegearme 5.1 und 5.3 das Membrandach in ein Tal und zwischen den beiden feststehenden Enden der Auslegearme 5.2 und 5.4 das Membrandach zu einem Berg verläuft, wobei sich Berg und Tal etwa mittig treffen.

Da die vier Seitenkanten 14 zwischen den Eckpunkten 4.1 bis 4.4 bogenförmig gekrümmt nach innen verlaufen, erhält das Membrandach 3 über seine gesamte Fläche eine ausreichende Spannung.

## Patentansprüche

1. Vorrichtung zum Überdachen von Behältnissen, insbesondere von Containern, Kabinen, Paletten od.dgl., sowie von Flächen zwischen bzw. neben diesen Behältnissen,
dadurch gekennzeichnet,
dass über das Behältnis (1) bzw. Fläche ein Membrandach (3) aus flexiblem Werkstoff gespannt ist, dessen Seitenkanten (14) tailliert, d.h., bogenförmig nach innen gewölbt sind.

2. Vorrichtung nach Anspruch 1, dadurch gekennzeichnet, dass das Membrandach (3) aus einem PVC-beschichteten Polyestergewebe besteht.

3. Vorrichtung nach Anspruch 1 oder 2, dadurch gekennzeichnet, dass vom Behältnis (1) zum Spannen des Membrandachs (3) Auslegearme (5.1-5.4) abragen.

4. Vorrichtung nach Anspruch 3, dadurch gekennzeichnet, dass zwei sich diagonal gegenüberliegende Auslegearme (5.2,5.4) am Container (1) festgelegt sind, während zwei weitere sich diagonal gegenüberliegende Auslegearme (5.1,5.3) gelenkig mit dem Container (1) verbunden sind.

5. Vorrichtung nach Anspruch 4, dadurch gekennzeichnet, dass die zwei festgelegten Auslegearme (5.2,5.4) in Gebrauchslage schräg nach unten und die zwei gelenkig verbundenen Auslegearme (5.1,5.3) schräg nach oben verlaufen.

6. Vorrichtung nach Anspruch 4 oder 5, dadurch gekennzeichnet, dass zumindest die gelenkig verbundenen Auslegearme (5.1,5.3) an ihrem freien Ende über einen Spanngurt (12.1,12.3) mit dem Behältnis (1) verbunden sind.

7. Vorrichtung nach wenigstens einem der Ansprüche 1-6, dadurch gekennzeichnet, dass das Membrandach (3) in Gebrauchslage eine antiklastische Form einnimmt.
